# EUROPÄISCHE PATENTSCHRIFT

(11) **EP 3 145 618 B1**
(45) Veröffentlichungstag und Bekanntmachung des Hinweises auf die Patenterteilung: **01.01.2020**
(21) Anmeldenummer: 15719144.6
(22) Anmeldetag: 18.04.2015
(51) Int. Cl.: B01D 35/153, B01D 35/16, B01D 36/00, B01D 29/21

(54) **FILTERVORRICHTUNG**
FILTER DEVICE
DISPOSITIF DE FILTRATION

(30) Priorität: 17.05.2014 DE 102014007302
(43) Veröffentlichungstag der Anmeldung: 29.03.2017
(60) Teilanmeldung: 19208693.2
(73) Patentinhaber: Hydac Fluidcarecenter GmbH, 66280 Sulzbach/Saar (DE)
(72) Erfinder: EBERLE, Richard, 66399 Ormesheim (DE); KREIBIG, Micha, 66780 Rehlingen-Siersburg (DE)
(74) Vertreter: Bartels und Partner, Patentanwälte
(86) Internationale Anmeldenummer: PCT/EP2015/000821
(87) Internationale Veröffentlichungsnummer: WO 2015/176791

(56) Entgegenhaltungen:
- WO-A1-2014/191476
- DE-A1- 19 538 883
- DE-A1- 19 716 085
- DE-U1-202006 017 614

## Beschreibung

Die Erfindung betrifft eine Filtervorrichtung für die Filtration von Fluiden wie Kraftstoffen, einschließlich Dieselkraftstoff, mit den Merkmalen im Oberbegriff von Anspruch 1.

Filtervorrichtungen der oben genannten Art sind Stand der Technik. Sie werden beispielsweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Verunreinigungen, wie Schmutzpartikel oder auch am Filterelement abzuscheidende Wasseranteile, zu schützen. An die sichere Funktion solcher Filtervorrichtungen sind hohe Anforderungen zu stellen, weil ein Betrieb betreffender Systeme mit nicht funktionsbereiter Filtervorrichtung wegen dadurch bedingter Funktionsausfälle oder Beschädigungen von Einspritzsystemen hohe wirtschaftliche Verluste verursachen würde.

Die DE 195 38 883 A1 beschreibt eine gattungsgemäße Filtervorrichtung für die Filtration von Fluiden wie Kraftstoffen, einschließlich Dieselkraftstoff, mit einem Filtergehäuse, innerhalb dessen ein Filterelement austauschbar festlegbar ist, das ein einen inneren Filterhohlraum umgebendes Filtermedium aufweist, mit einem zur Rohseite des Filterelementes führenden Fluideingang, mit einem Fluidausgang für das Ausströmen gefilterten Fluids von der Reinseite und mit einem Tankrücklaufanschluss, wobei ein sich im Filtergehäuse bis zu einer für den Filtrationsbetrieb vorgesehenen maximalen Füllstandshöhe erstreckendes Ausgleichsrohr vorgesehen ist, das an seinem unteren Ende mit dem Tankrücklaufanschluss verbunden und an seinem oberen Ende offen ist, wobei das Ausgleichsrohr an einer Stelle, die sich von dessen oberem und unteren Ende in einem Abstand befindet, ein inneres Steuerteil aufweist, in dem sich eine Durchgangsöffnung befindet, die eine Drosselstelle bildet, wobei das Filterelement über mindestens eine Endkappe an einer Elementaufnahme des Filtergehäuses festlegbar ist und wobei das Ausgleichsrohr am Filtergehäuse innerhalb der Elementaufnahme angebracht ist und sich koaxial zur Längsachse des in Funktionsposition befindlichen Filterelements durch dessen an der Elementaufnahme festgelegte Endkappe und den Filterhohlraum hindurch erstreckt.

Weitere Filtervorrichtungen gehen aus der DE 197 16 085 A1 und der WO 2014/191476 A1 hervor.

Im Hinblick auf diese Problematik liegt der Erfindung die Aufgabe zugrunde, eine Filtervorrichtung mit einem besonders sicheren Betriebsverhalten zur Verfügung zu stellen.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass das Ausgleichsrohr im Außendurchmesser und im Innendurchmesser gestuft ausgebildet ist, dass das Ausgleichsrohr mit dem Längenabschnitt des größeren Außendurchmessers und des größeren Innendurchmessers an die Elementaufnahme angrenzt und dass das die Durchgangsbohrung aufweisende Steuerteil den Übergang zwischen dem größeren Innendurchmesser und dem kleineren Innendurchmesser des Ausgleichsrohres bildet.

Es ist ferner vorgesehen, dass im Filtergehäuse ein Ausgleichsrohr vorgesehen ist, das sich von seinem mit dem Tankrücklaufanschluss verbundenen unteren Ende bis zu einer für den Filtrationsbetrieb vorgesehenen maximalen Füllstandshöhe erstreckt, wobei das Rohr an seinem oberen Ende offen ist und an einer Stelle, die sich in einem Abstand vom oberen und unteren Ende des Rohres befindet, ein inneres Steuerteil aufweist, in dem sich eine Durchgangsöffnung befindet, die eine Drosselstelle bildet. Bei entsprechender Wahl der Größe der im Steuerteil befindlichen Durchgangsöffnung, insbesondere in Form einer Durchgangsbohrung ist über das Ausgleichsrohr eine druckentlastende Entlüftung des Filtergehäuses zum Tankrücklauf hin gebildet, während gleichzeitig aufgrund der Drosselwirkung im Normalbetrieb der gewünschte Förderdruck erhalten bleibt. Somit ist eine Sicherheitseinrichtung realisiert, die sowohl Betriebsstörungen aufgrund fehlerhafter Gehäuseentlüftung vermeidet als auch über die Drosselstelle eine Druckentlastung des Filtergehäuses bilden kann.

Vorzugsweise ist das Steuerteil, das eine Art Verschlussteil ausbildet, im mittleren Längenbereich oder in der Nähe dieses Längenbereichs des Rohres angeordnet.

Bei bevorzugten Ausführungsbeispielen, bei denen das Filterelement über mindestens eine Endkappe an einer Elementaufnahme des Filtergehäuses festlegbar ist, ist das Ausgleichsrohr am Filtergehäuse innerhalb der Elementaufnahme angebracht und erstreckt sich koaxial zur Längsachse des in Funktionsposition befindlichen Filterelements durch dessen an der Filteraufnahme festgelegte Endkappe und den Filterhohlraum hindurch. Eine derartige, zur Längsachse konzentrische Anordnung des Ausgleichsrohres führt zu einer besonders kompakten Bauweise der Filtervorrichtung.

In besonders vorteilhafter Weise kann die obere Endkappe des Filterelements einen in den inneren Filterhohlraum ragenden Rohrstutzen aufweisen, durch den sich bei der Funktionsposition des Filterelements der obere Endbereich des Rohres hindurch erstreckt.

Hierbei kann mit besonderem Vorteil die Anordnung so getroffen sein, dass innerhalb des Rohrstutzens der oberen Endkappe eine Dichtpackung vorgesehen ist, die bei der Funktionsposition vom Rohr durchgriffen ist und mit diesem eine Dichtverbindung bildet, die den inneren Filterhohlraum gegenüber der Gehäuseinnenseite abdichtet. Bei einer Filtervorrichtung, bei der das Filterelement beim Filtrationsvorgang von seiner Außenseite zu dem die Reinseite bildenden Filterhohlraum hin durchströmt wird, kommt so beim Einsetzen des Filterelementes in die Funktionsposition selbsttätig die Abdichtung zwischen der Rohseite an der Gehäuseinnenseite und der Reinseite zustande.

Bei besonders vorteilhaften Ausführungsbeispielen sind im Filtergehäuse ein von der Rohseite zum Tankrücklaufanschluss führender Fluidweg sowie eine Sperreinrichtung vorhanden, die bei in das Gehäuse eingesetztem Filterelement diesen Fluidweg sperrt und bei entferntem Filterelement diesen Fluidweg freigibt. Als zusätzliche Sicherheitseinrichtung ist dadurch in der Förderleitung, die von einem betreffenden Tank über eine Förderpumpe sowie das Filtergehäuse zum Abnehmer (wie Einspritzsystem) führt, ein Bypass gebildet, der in Abhängigkeit vom Vorhandensein eines in das Filtergehäuse eingesetzten Filterelements mittels der Sperreinrichtung geschlossen ist, automatisch jedoch bei Fehlen des Filterelements geöffnet ist. Das Fehlen eines Filterelements und das dadurch bewirkte Öffnen des Bypasses über den Tankrücklaufanschluss zum drucklosen Tank führt zu einer Unterbrechung des Förderstromes zum Abnehmer, so dass die Gefahr vermieden ist, dass ein Betrieb bei versehentlich nicht in das Filtergehäuse eingesetztem Filterelement stattfinden kann. Hinsichtlich der Ausbildung der Sperreinrichtung kann die Anordnung mit besonderem Vorteil so getroffen sein, dass die Sperreinrichtung einen Ringkörper, der an der unteren Endkappe des Filterelements vorspringt und an dieser die Austrittsöffnung aus dem die Reinseite bildenden Filterhohlraum umgibt, aufweist, wobei der Ringkörper bei eingesetztem Filterelement abdichtend in einen Ringspalt eingreift, der an der Elementaufnahme des Gehäuses gebildet und mit dem Tankrücklaufanschluss in Fluidverbindung ist.

Bei besonders bevorzugten Ausführungsbeispielen kann als weitere Sicherheitseinrichtung im Filtergehäuse zwischen Fluidausgang und der Reinseite des Filterelements eine Barriereeinrichtung gebildet sein, die einen Zustrom von Fluid zum Fluidausgang nur bei einem vorgegebenen Füllstand im Gehäuse durch Überströmen der Barriereeinrichtung ermöglicht. Dadurch ist die Gefahr verhindert, dass bei Fehlen eines Filterelements und trotz des hierbei geöffneten Bypasses Kraftstoff, der über den Fluideingang dem Gehäuse zugefördert wird, zum Fluidausgang gelangen kann, weil die Barriereeinrichtung nur bei einer vorgegebenen Höhe des Füllstandes überströmbar ist, ein solcher Füllstand jedoch bei geöffnetem Bypass nicht zustande kommen kann, selbst wenn auch weiterhin Kraftstoff zugefördert würde.

In besonders vorteilhafter Weise kann die Barriereeinrichtung einen Rohrkörper aufweisen, der von der Elementaufnahme in den inneren Filterhohlraum des eingesetzten Filterelements bis zur Höhe des vorgegebenen Füllstandes vorspringt und innerhalb der Elementaufnahme mit dem Fluidausgang in Verbindung ist.

Nachstehend ist die Erfindung anhand eines in der Zeichnung dargestellten Ausführungsbeispiels im Einzelnen erläutert. Es zeigen:
- Fig. 1: eine aufgeschnitten und teils abgebrochen gezeichnete perspektivische Schrägansicht des Ausführungsbeispieles der Filtervorrichtung mit in das Filtergehäuse eingesetztem Filterelement; und
- Fig. 2: eine ebenfalls aufgeschnitten und teils abgebrochen gezeichnete perspektivische Schrägansicht des Ausführungsbeispiels ohne im Filtergehäuse befindlichem Filterelement.

Nachstehend ist die Erfindung am Beispiel eines Kraftstofffilters erläutert, der in einem (nicht gezeigten) Kraftstoffversorgungssystem eines Verbrennungsmotors zur Reinigung von Dieselöl vorgesehen ist. Die Erfindung eignet sich gleichermaßen für andere Fluide und auch andere Verwendungen.

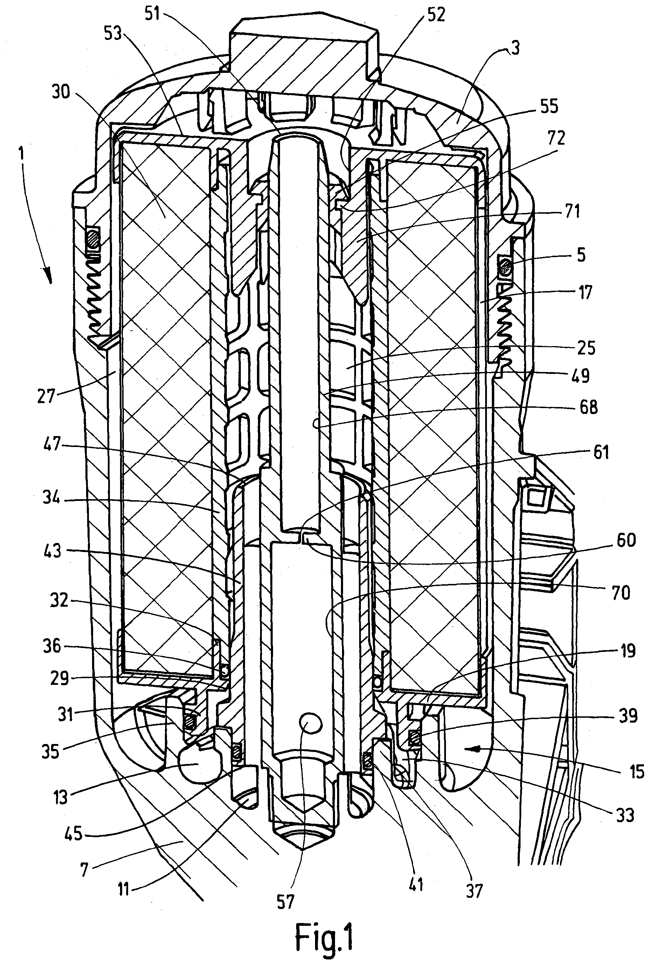

Die Vorrichtung weist ein Filtergehäuse 1 in Form eines hohlzylinderförmigen Topfes auf, der an seinem oberen, offenen Ende durch einen abnehmbaren Schraubdeckel 3 unter Mitwirkung eines Dichtelements 5 dicht verschließbar ist. Das Gehäuse 1 weist ein Bodenteil 7 auf, das bis auf Gehäuseanschlüsse, die in den Figuren nicht sichtbar sind, geschlossen ist. Bei diesen Gehäuseanschlüssen handelt es sich um einen Ausgangsanschluss für die Abgabe abgereinigten Dieselöls und einen Tankrücklaufanschluss. Der Ausgangsanschluss ist mit einer Ausgangskammer 11 in Verbindung, und der Tankrücklaufanschluss ist mit einer Rücklaufkammer 13 in Fluidverbindung, die im Bodenteil 7 in demjenigen Bereich gebildet sind, der eine Elementaufnahme 15 bildet, in der ein in das Gehäuse 1 eingesetztes Filterelement 17, das in Fig. 1 im eingebauten Zustand dargestellt ist, mit seiner unteren Endkappe 19 festlegbar ist.

Im Betrieb wird innerhalb des nicht dargestellten Kraftstoffversorgungssystems Dieselöl aus einem Tank mittels einer Förderpumpe zum Fluideingang des Filtergehäuses 1 gefördert. Der in der Zeichnung nicht sichtbare Fluideingang befindet sich am Gehäuse 1 oberhalb des Bodenteils 7 etwa in halber Höhe des Filtergehäuses. Der einströmende Kraftstoff durchströmt das eingesetzte Filterelement 17 von der äußeren Rohseite 27 her von außen nach innen zu einem inneren Filterhohlraum 25, der beim Filtrationsvorgang die Reinseite bildet. Wie der Fig. 1 entnehmbar ist, weist die in der Figur untere Endkappe 19 des Filterelements 17 einen zur zentralen Öffnung 29 des inneren Filterhohlraums 25 koaxialen, axial vorspringenden Ringkörper 31 auf, der die Öffnung 29 in einem radialen Abstand umgibt und in Zusammenwirkung mit der Elementaufnahme 15 eine Sperreinrichtung bildet. Zu diesem Zweck bildet die Elementaufnahme 15 einen den Eingangsteil der Rücklaufkammer 13 bildenden Ringspalt 33, der außenseitig durch einen von der Elementaufnahme 15 vorstehenden Rohrstutzen 35 und innenseitig durch eine etwas weniger weit vorstehende Ringrippe 37 begrenzt ist. Ein an dem Ringkörper 31 radial außen liegendes Dichtelement 39 bildet eine Abdichtung an der Außenseite des Ringspaltes 33, während ein Dichtelement 41 eine Abdichtung an der Innenseite der Ringrippe 37 bildet.

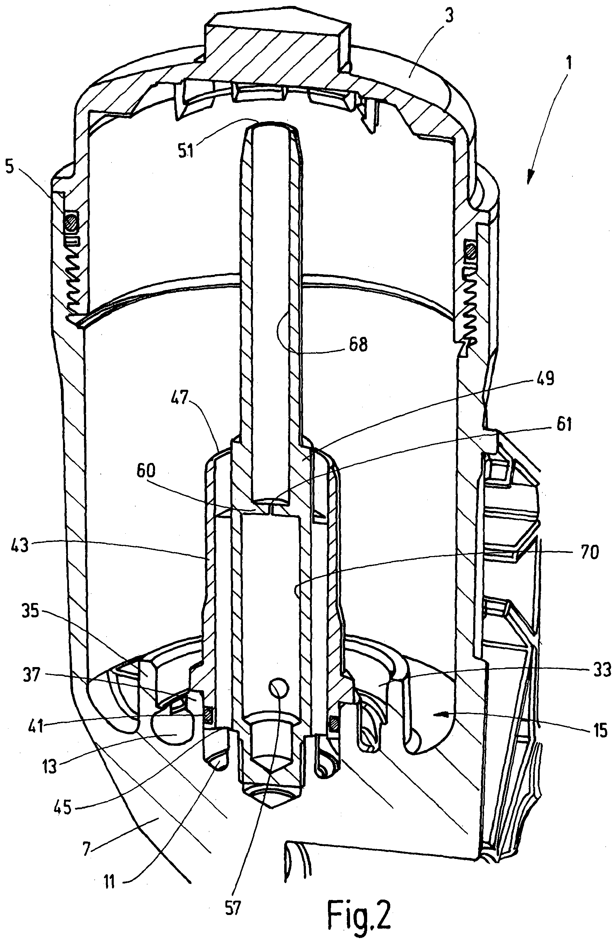

Die weitere Ausgestaltung der Elementaufnahme 15 ist aus Fig. 2 deutlich ersichtlich. Ein als Barriereeinrichtung dienender Rohrkörper 43 erstreckt sich von der Elementaufnahme 15 konzentrisch zur Längsachse der Vorrichtung durch den Durchgang 29 der Endkappe 19 axial in den inneren Filterhohlraum 25 des in das Gehäuse 1 eingesetzten Filterelements 17 hinein. Die Endkappe 19 weist ein den Durchgang 29 umgebendes Rohrstück 32 auf, das sich axial nach oben erstreckt und eine Anlagefläche für das untere Ende des fluiddurchlässigen Stützrohres 34 des Filterelements 17 bildet. Ein Dichtelement 36 bildet am Rohrstück 32 eine Abdichtung des Durchgangs 29 gegenüber der Außenseite des Rohrkörpers 43. Dieser ist, wie aus Fig. 1 ersichtlich ist, zu der Ausgangskammer 11 offen. Mit dem oberen, offenen Rohrende 47 mündet der Rohrkörper 43 auf etwa halber Höhe des Filtergehäuses 1 im inneren Filterhohlraum 25 des eingesetzten Filterelements 17, also der Reinseite beim Filtrationsvorgang. Bei normalem Füllstand beim Filtrationsbetrieb mit eingesetztem Filterelement 17 überströmt daher der das Filterelement 17 von außen nach innen durchströmende Kraftstoff das Rohrende 47 des Rohrkörpers 43, so dass abgereinigter Kraftstoff in die Ausgangskammer 11 einströmt und über den (nicht gezeigten) Fluidausgangsanschluss aus dem Filtergehäuse 1 austritt.

Wenn sich, wie in Fig. 2 gezeigt, kein Filterelement 17 im Gehäuse 1 befindet und somit im Ringspalt 33 keine Sperreinrichtung wirksam ist, weil der Ringspalt 33 zur Rücklaufkammer 13 und damit zum Tankrücklauf offen ist, kann sich im Gehäuse 1 kein Füllstand an Kraftstoff bilden, der das Rohrende 47 des als Barriereeinrichtung dienenden Rohrkörpers 43 überströmen könnte. Würde die Vorrichtung ohne eingesetztes Filterelement 17 in Betrieb gesetzt werden, würde zugeförderter Kraftstoff den Rohrstutzen 35 überströmend über den Ringspalt 33 und die Rücklaufkammer 13 zum Tank abströmen, so dass kein ungefilterter Kraftstoff über die Ausgangskammer 11 zum Fluidausgangsanschluss gelangen könnte. Da der Ringspalt 33 durch den vom Bodenteil 7 vorstehenden Rohrstutzen 35 begrenzt ist, der überströmt werden muss, verbleibt in diesem Falle ein Restsumpf innerhalb eines am Boden des Gehäuses 1 gebildeten Sammelraumes, in dem gegebenenfalls bei einer Entnahme des Filterelements 17 von dessen Außenseite abfallende Verschmutzungen zurückbleiben und nicht über den Rücklauf zum Tank zurück gelangen.

Innerhalb des Rohrkörpers 43 erstreckt sich von der Elementaufnahme 15 zur Längsachse konzentrisch ein Ausgleichsrohr 49 durch den inneren Filterhohlraum 25 des eingesetzten Filterelements 17 hindurch so weit nach oben, dass sein oberes Ende 51 auf der Höhe des für den Filtrationsbetrieb vorgesehenen maximalen Füllstandes liegt. Dabei durchgreift das Ausgleichsrohr 49 eine an der oberen Endkappe 53 des eingesetzten Filterelements befindliche Öffnung 52. Diese ist durch die Innenseite eines Rohrstutzens 71 gebildet, der sich von der oberen Endkappe 53 des Filterelements 17 axial nach unten in den Filterhohlraum 25 erstreckt. Der Rohrstutzen 71 weist innenseitig eine radial nach innen vorstehende Ringrippe 72 auf, mittels deren eine elastomere Dichtpackung 55 festgelegt ist.

Bei in der Funktionsposition befindlichem Filterelement 17 durchgreift das Ausgleichsrohr 49 mit seinem zum Ende 51 hin verjüngten oberen Endbereich die Dichtpackung 55 und bildet so die Abdichtung zwischen dem oberen Ende des Filterhohlraumes 25 und der Gehäuseinnenseite, also die Abdichtung zwischen der Reinseite und der an der Außenseite des Filterelements 17 befindlichen Rohseite 27.

Während das Ausgleichsrohr 49 an seinem oberen Ende 51 offen ist, ist das untere Ende des Ausgleichsrohres 49 bis auf einen zur Längsachse quer verlaufenden Kanal 57 geschlossen, der das Innere des Ausgleichsrohres 49 mit der Rücklaufkammer 13 verbindet. Wie aus den Figuren ersichtlich, ist das Ausgleichsrohr 49 sowohl im Außendurchmesser als im Innendurchmesser gestuft, wobei der an die Elementaufnahme 15 angrenzende untere Bereich 70 einen geringeren Innendurchmesser als der darüberliegende Bereich 78 besitzt und über den Großteil der Länge dieser Bereiche 68, 70 auch der Außendurchmesser des Ausgleichsrohres 49 unterschiedlich ist, d.h. im oberen Teil geringer als im unteren Teil ist. An der Übergangsstelle zwischen dem Bereich 68 kleineren Innendurchmessers und dem Bereich 70 größeren Innendurchmessers befindet sich im Rohrinneren ein Art Steuer- oder Verschlussteil 60, durch das sich eine Durchgangsöffnung, insbesondere in Form einer Durchgangsbohrung 61 erstreckt. Das Steuerteil 60 mit der Durchgangsbohrung 61 befindet sich im mittleren Längenbereich des Ausgleichsrohres 49, genauer gesagt etwas unterhalb der Mitte der Rohrlänge. Die Durchgangsbohrung 61 ist so dimensioniert, dass sie eine Drosselstelle bildet, über die der Innenraum des Filtergehäuses 1, der beim Filtriervorgang die Rohseite 27 bildet, mit dem Tankrücklaufanschluss in Verbindung ist. Die Größe der Durchgangsbohrung 61 ist so gewählt, dass über das Ausgleichsrohr 49 zwar eine druckentlastende, selbsttätig wirkende Entlüftungseinrichtung für das Filtergehäuse 1 gebildet ist, dass durch die Drosselwirkung der Durchgangsbohrung 61 jedoch ein gewünschter, vorgegebener Förderdruck beim normalen Filtrationsbetrieb beibehalten ist. Dadurch dass die Drosselstelle 61 in etwa mittig innerhalb des Ausgleichsrohres 49 angeordnet ist, sind die Strömungsverhältnisse aufgrund einer optimierten Drosselwirkung verbessert.

## Patentansprüche

1. Filtervorrichtung für die Filtration von Fluiden wie Kraftstoffen, einschließlich Dieselkraftstoff, mit einem Filtergehäuse (1), innerhalb dessen ein Filterelement (17) austauschbar festlegbar ist, das ein einen inneren Filterhohlraum (25) umgebendes Filtermedium aufweist, mit einem zur Rohseite (27) des Filterelementes (17) führenden Fluideingang (21), mit einem Fluidausgang (9) für das Ausströmen gefilterten Fluids von der Reinseite (25) und mit einem Tankrücklaufanschluss (13), wobei ein sich im Filtergehäuse (1) bis zu einer für den Filtrationsbetrieb vorgesehenen maximalen Füllstandshöhe erstreckendes Ausgleichsrohr (49) vorgesehen ist, das an seinem unteren Ende mit dem Tankrücklaufanschluss (13) verbunden und an seinem oberen Ende (51) offen ist, wobei das Ausgleichsrohr (49) an einer Stelle, die sich von dessen oberem und unteren Ende in einem Abstand befindet, ein inneres Steuerteil (60) aufweist, in dem sich eine Durchgangsöffnung (61) befindet, die eine Drosselstelle bildet, wobei das Filterelement (17) über mindestens eine Endkappe (19) an einer Elementaufnahme (15) des Filtergehäuses (1) festlegbar ist und wobei das Ausgleichsrohr (49) am Filtergehäuse (1) innerhalb der Elementaufnahme (15) angebracht ist und sich koaxial zur Längsachse des in Funktionsposition befindlichen Filterelements (17) durch dessen an der Elementaufnahme (15) festgelegte Endkappe (19) und den Filterhohlraum (30) hindurch erstreckt, **dadurch gekennzeichnet, dass** das Ausgleichsrohr (49) im Außendurchmesser und im Innendurchmesser gestuft ausgebildet ist, dass das Ausgleichsrohr (49) mit dem Längenabschnitt des größeren Außendurchmessers und des größeren Innendurchmessers an die Elementaufnahme (15) angrenzt und dass das die Durchgangsbohrung (61) aufweisende Steuerteil (60) den Übergang zwischen dem größeren Innendurchmesser und dem kleineren Innendurchmesser des Ausgleichsrohres (49) bildet.

2. Filtervorrichtung nach Anspruch 1, **dadurch gekennzeichnet, dass** das Steuerteil (60) im mittleren Längenbereich oder in der Nähe des mittleren Längenbereichs des Ausgleichsrohres (49) angeordnet ist.

3. Filtervorrichtung nach Anspruch 1 oder 2, **dadurch gekennzeichnet, dass** die obere Endkappe (51) des Filterelements (17) einen in den inneren Filterhohlraum (25) ragenden Rohrstutzen (71) aufweist, durch den sich bei der Funktionsposition des Filterelements (17) der obere Endbereich des Ausgleichsrohres (49) hindurch erstreckt.

4. Filtervorrichtung nach Anspruch 3, **dadurch gekennzeichnet, dass** innerhalb des Rohrstutzens (71) der oberen Endkappe (53) eine Dichtpackung (55) vorgesehen ist, die bei der Funktionsposition vom Ausgleichsrohr (49) durchgriffen ist und mit diesem eine Dichtverbindung bildet, die den inneren Filterhohlraum (25) gegenüber der Gehäuseinnenseite abdichtet.

5. Filtervorrichtung nach einem der vorstehenden Ansprüche, **dadurch gekennzeichnet, dass** im Filtergehäuse (1) ein von der Rohseite (27) zum Tankrücklaufanschluss (13) führender Fluidweg (33) sowie eine Sperreinrichtung (31) vorhanden sind, die bei in das Gehäuse (1) eingesetztem Filterelement (17) diesen Fluidweg (33) sperrt und bei entferntem Filterelement (17) diesen Fluidweg (33) freigibt.

6. Filtervorrichtung nach Anspruch 5, **dadurch gekennzeichnet, dass** die Sperreinrichtung einen Ringkörper (31), der an der unteren Endkappe (19) des Filterelements (17) vorspringt und an dieser die Austrittsöffnung (29) aus dem die Reinseite bildenden Filterhohlraum (25) umgibt, aufweist, welcher Ringkörper (31) bei eingesetztem Filterelement (17) abdichtend in einen Ringspalt (33) eingreift, der an der Elementaufnahme (15) des Gehäuses (1) gebildet und mit dem Tankrücklaufanschluss (13) in Fluidverbindung ist.

7. Filtervorrichtung nach Anspruch 6, **dadurch gekennzeichnet, dass** der Ringspalt (33), in den der die Sperreinrichtung bildende Ringkörper (31) des eingesetzten Filterelements (17) eingreift, innenseitig durch eine den Rohrkörper (43) in einem radialen Abstand umgebende Ringrippe (37) der Elementaufnahme (15) und außenseitig durch einen von der Elementaufnahme (15) vorstehenden Rohrstutzen (35) begrenzt ist, dessen Außenseite an die Rohseite (27) des Gehäuses (1) angrenzt, so dass bei entferntem Filterelement (17) der Durchgang von der Rohseite (27) zum Fluidausgang (9) für den Rohrstutzen (35) überströmendes Fluid freigegeben ist.

8. Filtervorrichtung nach Anspruch 6 oder 7, **dadurch gekennzeichnet, dass** die Abdichtung zwischen Ringkörper (31) und Ringspalt (33) durch zumindest ein an Außenseite und/oder Innenseite des Ringkörpers (31) vorgesehenes Dichtelement (39) und/oder zumindest ein an der Ringrippe (37) und/oder der Innenseite des Rohrstutzens (35) vorgesehenes Dichtelement (41) gebildet ist.

9. Filtervorrichtung nach einem der vorstehenden Ansprüche, **dadurch gekennzeichnet, dass** im Filtergehäuse (1) zwischen Fluidausgang (9) und der Reinseite (25) des Filterelements (17) eine Barriereeinrichtung (43) gebildet ist, die einen Zustrom von Fluid zum Fluidausgang (9) nur bei einem vorgegebenen Füllstand im Gehäuse (1) durch Überströmen der Barriereeinrichtung (43) ermöglicht.

10. Filtervorrichtung nach Anspruch 9, **dadurch gekennzeichnet, dass** die Barriereeinrichtung einen Rohrkörper (43) aufweist, der von der Elementaufnahme (15) in den inneren Hohlraum (25) des eingesetzten Filterelements (17) bis zur Höhe des vorgegebenen Füllstands vorspringt und innerhalb der Elementaufnahme (15) mit dem Fluidausgang (9) in Verbindung ist.

## Claims

1. Filter device for the filtration of fluids such as fuels, including diesel fuel, having a filter housing (1) inside which a filter element (17) can be replaceably fixed, said filter element having a filter medium surrounding an inner filter cavity (25), with a fluid inlet (21) leading to the dirty side (27) of the filter element (17), with a fluid outlet (9) for the outflow of filtered fluids from the clean side (25) and with a tank return connection (13), wherein a balance pipe (49) extending up to a maximum filling level intended for the filtration operation is provided in the filter housing (1), which balance pipe is connected at its lower end to the tank return connection (13) and is open at its upper end (51), wherein the balance pipe (49) has, at a point which is at a distance from its upper and lower end, an inner control part (60) in which there is a through-hole (61) which forms a throttling point, wherein the filter element (17) can be fixed via at least one end cap (19) to an element holder (15) of the filter housing (1) and wherein the balance pipe (49) is mounted on the filter housing (1) inside the element holder (15) and extends, coaxially with the longitudinal axis of the filter element (17) located in the functional position, through its end cap (19) fixed to the element holder (15) and through the filter cavity (30), **characterised in that** the balance pipe (49) is designed to be stepped in the outer diameter and in the inner diameter, **in that** the balance pipe (49) abuts the element holder (15) with the longitudinal portion of the larger outer diameter and the larger inner diameter, and **in that** the control part (60) having the through-hole (61) forms the transition between the larger inner diameter and the smaller inner diameter of the balance pipe (49).

2. Filter device according to claim 1, **characterised in that** the control part (60) is arranged in the middle longitudinal region or near the middle longitudinal region of the balance pipe (49).

3. Filter device according to claim 1 or 2, **characterised in that** the upper end cap (51) of the filter element (17) has a pipe socket (71) projecting into the inner filter cavity (25), through which the upper end region of the balance pipe (49) extends when the filter element (17) is in the functional position.

4. Filter device according to claim 3, **characterised in that** a packing (55) is provided inside the pipe socket (71) of the upper end cap (53), the balance pipe (49) passing through said packing in the functional position and forming a sealing connection therewith which seals the inner filter cavity (25) against the inside of the housing.

5. Filter device according to one of the preceding claims, **characterised in that** a fluid path (33) leading from the dirty side (27) to the tank return connection (13) as well as a blocking device (31) are present in the filter housing (1), said blocking device blocking this fluid path (33) when the filter element (17) is inserted into the housing (1) and releasing this fluid path (33) when the filter element (17) is removed.

6. Filter device according to claim 5, **characterised in that** the blocking device has an annular body (31), which protrudes at the lower end cap (19) of the filter element (17) and at said end cap surrounds the outlet opening (29) out of the filter cavity (25) which forms the clean side, which annular body (31) engages sealingly in an annular gap (33) when the filter element (17) is inserted, said annular gap being formed on the element holder (15) of the housing (1) and being in fluid communication with the tank return connection (13).

7. Filter device according to claim 6, **characterised in that** the annular gap (33), into which the annular body (31) of the inserted filter element (17) forming the blocking device engages, is limited on the inside by an annular rib (37) of the element holder (15) which surrounds the tube body (43) at a radial distance, and on the outside by a pipe socket (35) protruding from the element holder (15), the outer side of which pipe socket abuts the dirty side (27) of the housing (1) such that, when the filter element (17) is removed, the passage from the dirty side (27) to the fluid outlet (9) is released for the fluid overflowing the pipe socket (35).

8. Filter device according to claim 6 or 7, **characterised in that** the seal between annular body (31) and annular gap (33) is formed by at least one sealing element (39) provided on the outer side and/or inner side of the annular body (31) and/or by at least one sealing element (41) provided on the annular rib (37) and/or on the inner side of the pipe socket (35).

9. Filter device according to one of the preceding claims, **characterised in that** a barrier device (43) is formed in the filter housing (1) between fluid outlet (9) and the clean side (25) of the filter element (17), which barrier device only enables an inflow of fluid to the fluid outlet (9) at a predetermined filling level in the housing (1) by overflowing the barrier device (43).

10. Filter device according to claim 9, **characterised in that** the barrier device has a pipe body (43) which protrudes from the element holder (15) into the inner cavity (25) of the inserted filter element (17) up to the height of the predetermined filling level and is connected to the fluid outlet (9) inside the element holder (15).

## Revendications

1. Dispositif de filtration pour la filtration de fluides, comme des carburants, y compris du carburant diesel, comprenant une enveloppe (1) de filtre, dans laquelle un élément (17) de filtre peut être fixé en pouvant être remplacé, lequel a un milieu filtrant entourant une cavité (25) intérieure de filtre, comprenant une entrée (21) de fluide menant au côté (27) brut de l'élément (17) de filtre, comprenant une sortie (9) de fluide pour faire sortir le fluide filtré du côté (25) propre et comprenant un raccord (13) de retour au réservoir, dans lequel il est prévu un tube (49) de compensation, qui s'étend dans l'enveloppe (1) du filtre jusqu'à un niveau de remplissage maximum prévu pour le fonctionnement en filtration, qui communique, à son extrémité inférieure, avec le raccord (13) de retour au réservoir et qui est ouvert à son extrémité (51) supérieure, le tube (49) de compensation ayant, en un point, qui se trouve à une certaine distance de ses extrémités supérieure et inférieure, une partie (60) intérieure de commande, dans laquelle se trouve une ouverture (61) de passage, qui forme un point d'étranglement, l'élément (17) de filtre pouvant, par au moins une coiffe (19) d'extrémité, être fixé à un logement (15) d'élément de l'enveloppe (1) du filtre et dans lequel le tube (49) de compensation est monté sur l'enveloppe (1) du filtre dans le logement (15) d'élément et s'étend, coaxialement à l'axe longitudinal de l'élément (17) de filtre se trouvant en la position de fonctionnement, en passant dans la coiffe (19) de l'extrémité fixée au logement (15) d'élément et dans la cavité (30) du filtre, **caractérisé en ce que** le tube (49) de compensation est constitué en diamètre extérieur et en diamètre intérieur, de manière à ce que le tube (49) de compensation soit voisin, par la partie longitudinale du plus grand diamètre extérieur et du plus grand diamètre intérieur, du logement (15) d'élément et de manière à ce que la partie (60) de commande, ayant le trou (61) de passage, forme la transition entre le diamètre intérieur plus grand et le diamètre intérieur plus petit du tube (49) de compensation.

2. Dispositif de filtration suivant la revendication 1, **caractérisé en ce que** la partie (60) de commande est disposée dans la partie longitudinale médiane ou à proximité de la partie longitudinale médiane du tube (49) de compensation.

3. Dispositif de filtration suivant la revendication 1 ou 2, **caractérisé en ce que** la coiffe (51) de l'extrémité supérieure de l'élément (17) de filtre a une tubulure (71) pénétrant dans la cavité (25) intérieure du filtre, tubulure dans laquelle passe, lorsque l'élément (17) de filtre est en position de fonctionnement, la partie d'extrémité supérieure du tube (49) de compensation.

4. Dispositif de filtration suivant la revendication 3, **caractérisé en ce qu'**il est prévu, à l'intérieur de la tubulure (71) de la coiffe (53) d'extrémité supérieure, un paquetage (55) d'étanchéité, qui, en la position de fonctionnement, est traversé par le tube (49) de compensation et forme avec celui-ci une liaison étanche, qui rend la cavité (25) intérieure du filtre étanche par rapport à la face intérieure de l'enveloppe.

5. Dispositif de filtration suivant l'une des revendications précédentes, **caractérisé en ce qu'**il y a, dans l'enveloppe (1) du filtre, un trajet (33) pour du fluide, menant du côté (27) brut au raccord (13) de retour au réservoir, ainsi qu'un dispositif (31) d'obturation, qui, lorsque l'élément (17) de filtre est inséré dans l'enveloppe (1), obture ce trajet (33) de fluide et, lorsque l'élément (17) de filtre est retiré, dégage ce trajet (33) de fluide.

6. Dispositif de filtration suivant la revendication 5, **caractérisé en ce que** le dispositif d'obturation a une pièce (31) annulaire, qui fait saillie de la coiffe (19) d'extrémité inférieure de l'élément (17) de filtre et qui, sur celle-ci, entoure l'ouverture (29) de sortie de la cavité (25) du filtre formant le côté propre, laquelle pièce (31) annulaire pénètre, lorsque l'élément (17) de filtre est inséré, de manière étanche dans un espace (33) annulaire, qui est formé sur le logement (15) d'élément de l'enveloppe (1) et qui est en communication fluidique avec le raccord (13) de retour au réservoir.

7. Dispositif de filtration suivant la revendication 6, **caractérisé en ce que** l'intervalle (33) annulaire, dans lequel pénètre la pièce (31) annulaire formant le dispositif d'obturation de l'élément (17) de filtre inséré, est délimité, du côté intérieur, par une nervure (37) annulaire, entourant la pièce (43) tubulaire à distance radiale, du logement (15) d'élément et, du côté extérieur, par une tubulure (35) en saillie du logement (15) d'élément, dont le côté extérieur est voisin du côté (27) brut de l'enveloppe (1), de sorte que, lorsque l'élément (17) de filtre est retiré, le passage, allant du côté (27) brut à la sortie (9) de fluide, soit dégagé pour du fluide débordant de la tubulure (35).

8. Dispositif de filtration suivant la revendication 6 ou 7, **caractérisé en ce que** l'étanchéité entre la pièce (31) annulaire et l'intervalle (33) annulaire est formée par au moins un élément (39) d'étanchéité, prévu sur la face extérieure et/ou la face intérieure de la pièce (31) annulaire et/ou par au moins un élément (41) d'étanchéité prévu sur la nervure (37) annulaire et/ou la face intérieure de la tubulure (35).

9. Dispositif de filtration suivant l'une des revendications précédentes, **caractérisé en ce qu'**il est formé dans l'enveloppe (1) du filtre, entre la sortie (9) de fluide et le côté (25) propre de l'élément (17) de filtre, un dispositif (43) formant barrière, qui ne rend possible, par débordement du dispositif (43) formant barrière, une arrivée de fluide à la sortie (9) de fluide, que pour un niveau donné à l'avance dans l'enveloppe (1).

10. Dispositif de filtration suivant la revendication 9, **caractérisé en ce que** le dispositif formant barrière a une pièce (43) tubulaire, qui fait saillie du logement (15) d'élément dans la cavité (25) intérieure de l'élément (17) de filtre inséré jusqu'à hauteur du niveau donné à l'avance et qui est en communication avec la sortie (9) de fluide à l'intérieur du logement (15) d'élément.
